# EUROPEAN PATENT SPECIFICATION

(11) **EP 2 848 466 B1**
(45) Date of publication and mention of the grant of the patent: **19.04.2017**
(21) Application number: 14183597.5
(22) Date of filing: 04.09.2014
(51) Int. Cl.: B60P 1/16, B65G 65/23

(54) **A method and an overturning device for frontal and lateral emptying of containers**
Verfahren und Überschlagsvorrichtung zum frontalen und lateralen Entleeren von Behältern
Procédé et dispositif de renversement pour vidage frontal et latéral de contenants

(30) Priority: 11.09.2013 SI 201300260
(43) Date of publication of application: 18.03.2015
(73) Proprietor: RCeNem, d.o.o., Podruznica novi materiali in energija iz procesa pridobivanja elektricne energije, 1420 Trbovije (SI)
(72) Inventor: Pirnar, Miro, 1420 Trbovlje (SI); Lukancic, Janez, 1290 Grosuplje (SI)
(74) Representative: Flak, Antonija

(56) References cited:
- FR-A- 715 093
- FR-A- 1 016 524
- US-A1- 2007 065 265

## Description

A method and an overturning device for frontal and lateral emptying of containers The present invention belongs to the field of methods and devices for emptying of containers, more precisely to the field of devices for frontal and lateral emptying of containers.

The technical problem, which is solved by the present invention, is the constructional design of a device that will enable simple overturning of the container around the transverse and longitudinal axis of the container for transportation of bulk materials.

From the technical point of view transportation of bulk materials represents a bigger problem than transportation of liquids or material in units. The transportation mode of bulk materials depends mostly on the state of the material, which is being transported and on the transportation distance (length of transport). When transporting bulk materials it is important to consider the state of the material, for example material temperature, specific weight, angle of repose, angle of spatula, stickiness, granulation, grain shape, granularity, possibility of electrical charging, toxicity, radioactivity, abrasion, humidity, hygroscopicity, flammability, smell, compressibility, corrosiveness and similar characteristics. Transportation distances can vary, from few metres to hundreds of kilometres.

When transporting bulk materials it is important to consider the above mentioned states of the material. Containers can be loaded by discharging of the material from a silo, by loading of the material with auxiliary conveyor belts, vibrational feeders, screw conveyors, by loading of the material with construction machinery, etc. Container emptying depends on the materials, which are being transported as well as on technological options at the final location. It is common that these options are more limited if compared to technological options at the loading site. The aim of this invention is to construct a device that will enable several different emptying methods for any given type of container regardless of the emptying location. Two different container types can be used, which can both be emptied with one device. The device for overturning of bulk materials should be useful for containers with front doors as well as for containers with doors on both lateral sides.

Emptying of the containers loaded with bulk materials can be accomplished by different methods. Patent EP1690809 B1 discloses a container for transportation of bulk materials with a characteristic shape and clamps for the forklift truck on the bottom plate. Emptying is performed with a forklift, which functions as the emptying device. Patent CN200981743Y discloses a universal container for bulk and packaged cargo. Patent US6966741 B2 discloses a device for container emptying, which differs significantly from the present invention. Patent application EP1839988 A3 also discloses a device for container emptying with the help of a forklift. This device is adapted for containers on cargo trains. Patent document US2007065265 discloses the preamble of claim 1, i.e. a device for overturning containers, which is used only in combination with a front end loader, which also provides energy to device through its additional hydraulics. The device has three hydraulic cylinders, the smaller one acts at beginning of lifting process and makes smaller amount of work, while the other two cylinders complete the overturning process. This solution differs from the present invention as the latter enables the whole process to be done in one stroke with two cylinders.

All of the above described solutions, which allow emptying of different container types and different cargo types, differ from the present invention.

The essence of the method of container emptying and the overturning device for frontal and lateral emptying is that overturning of the container on the front side is enabled by a lifting element, which is rotatably mounted into the base, so that the container can be rotated around its transverse axis, and it is lifted and lowered with a help of a hydraulic assembly, which includes hydraulic cylinders and a hydraulic aggregate with installation. For lateral emptying of a container the device is installed on the lifting element of the basic device and allows rotation of the container around its longitudinal axis. The device is suitable for standard containers used in truck, rail and ship transport and allows levelling as well as adaptation to the terrain.

For a further understanding of the method and an overturning device for frontal and lateral emptying of containers according to the invention, reference should be made to the following detailed disclosure, taken in conjunction with the accompanying figures, which show:
- Figure 1: The device for frontal emptying of the container
- Figure 2: The device in lifted position for frontal emptying of the container
- Figure 3: The device for frontal emptying of the container according to the embodiment I
- Figure 4: The device for frontal emptying of the container according to the embodiment I in lifted position of lateral emptying of the container
- Figure 5: The container for frontal emptying
- Figure 6: The container for lateral emptying

The overturning device according to the invention comprises a base 1.1, a lifting element 1.2, which is rotatably mounted into the base 1.1 in axis 1.6, and a hydraulic assembly 1.3 comprising hydraulic cylinders and a hydraulic aggregate with installation. The base 1.1 consists of a rectangularly shaped base, which has on one side a first transverse carrier 1.11 and on the other side a second transverse carrier 1.12. Both transverse carriers 1.11 and 1.12 have on both ends stabilizers 1.7 for adaptation to the terrain. Between both transverse carriers 1.11 and 1.12 are two inner transverse carriers 1.13 and 1.14 with openings 1.5, which allow transfers with a forklift, on both sides. Hydraulic assembly 1.3 is mounted into a part of the base 1.1, which is near the transverse carrier 1.11 and in the middle of the lifting element 1.2.

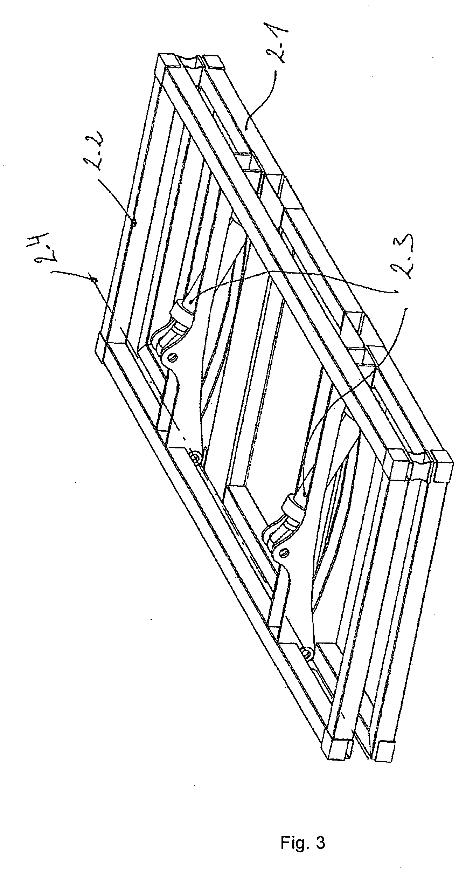

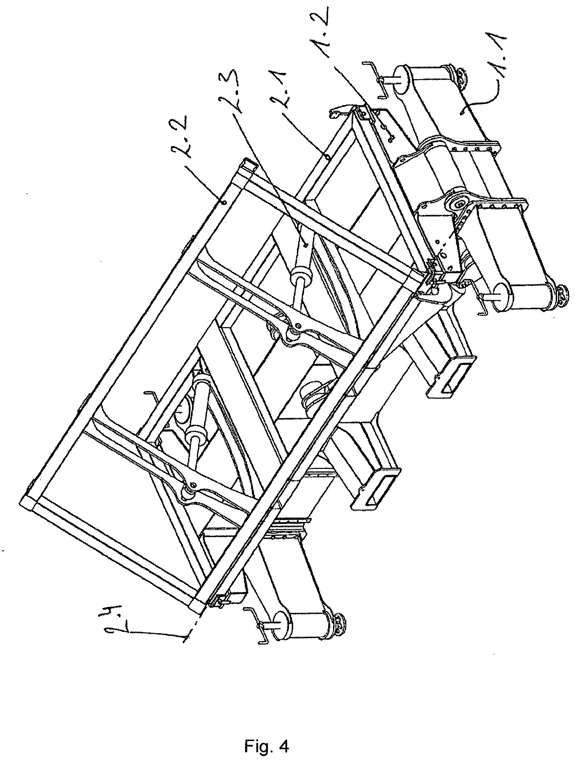

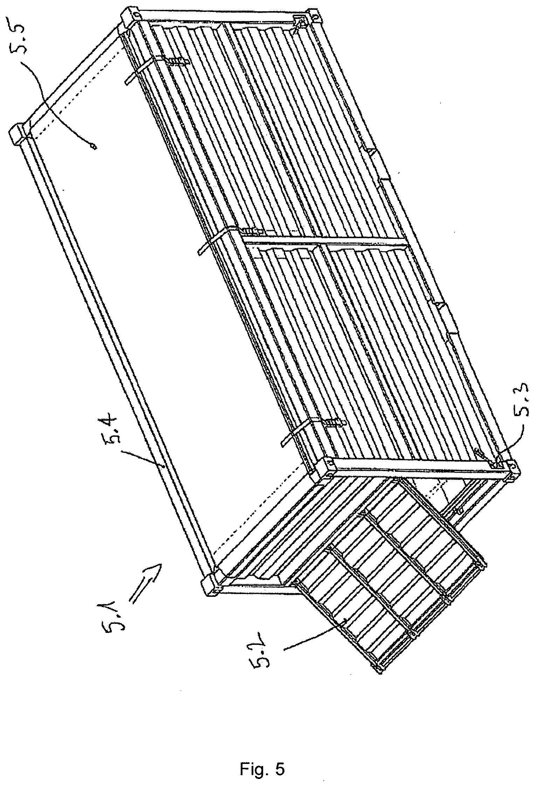

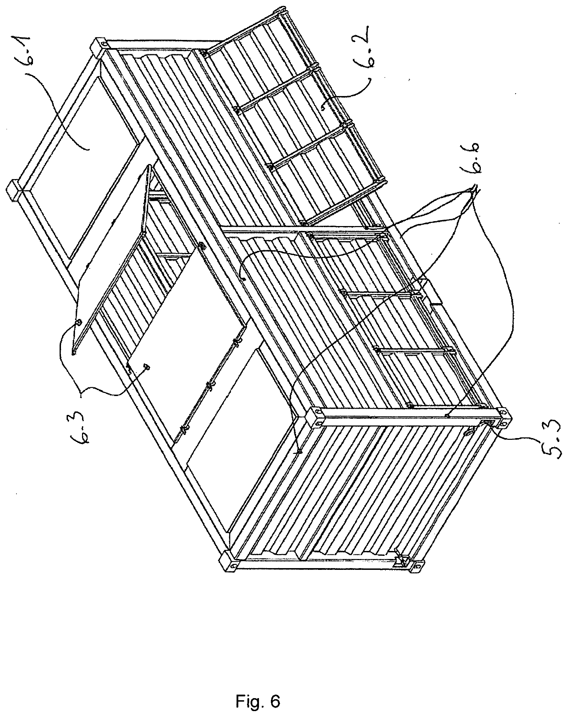

The overturning device according to the embodiment I is shown in figures 3 and 4 and enables emptying of the container on the lateral side with overturning around the longitudinal axis. A second rectangularly shaped base 2.1 is mounted on to the lifting element 1.2, which functions as a supporting passive carrier. A rectangularly shaped moving part 2.2 is rotatably mounted to the base 2.1 around the longitudinal axis 2.4. Between the base 2.1 and mobile part 2.2 are two hydraulic cylinders 2.3, which are connected to the hydraulic installation of the basic overturning device 1.3. Containers represented in figures 5 and 6 can be used with this device. In addition, also other standard types of containers, which allow frontal or lateral emptying of bulk materials, can be used.

The method of container emptying will be further described in conjunction with figures 5 and 6, which show two different containers. Container 5.1 for frontal emptying is on both front sides equipped with doors 5.2, which are rotatably mounted on the upper edge of doors, so that rotation around the longitudinal axis is possible. The doors occupy approximately 2/3 of the height of the containers front side. During transportation they are secured with a closing mechanism 5.3, which prevents unwanted opening and is installed below the doors. A rolled tarpaurin 5.5, which prevents the dusting of the material during transport and protects the cargo space against water ingress, is installed on the roof. During container emptying on the mentioned device it is not necessary to remove the rolled tarpaurin. With appropriate instructions it is possible to transport the material without the use of rolled tarpaurin. This type of container allows emptying with container overturning on a special device or with a working machine. In this case, it is necessary to unwind the rolled tarpaurin and to secure it in the end position. With the device according to the invention this container type can be emptied in a more economical way, by opening the front doors on one side and tilting only to the angle, which is equal to the angle of repose or to the angle of spatula (approximately 50°), rather than tilting for 180°. In this way, time as well as energy needed to empty the container is saved. Therefore, the above described container with front doors is technologically universal with regard to the emptying of bulk materials.

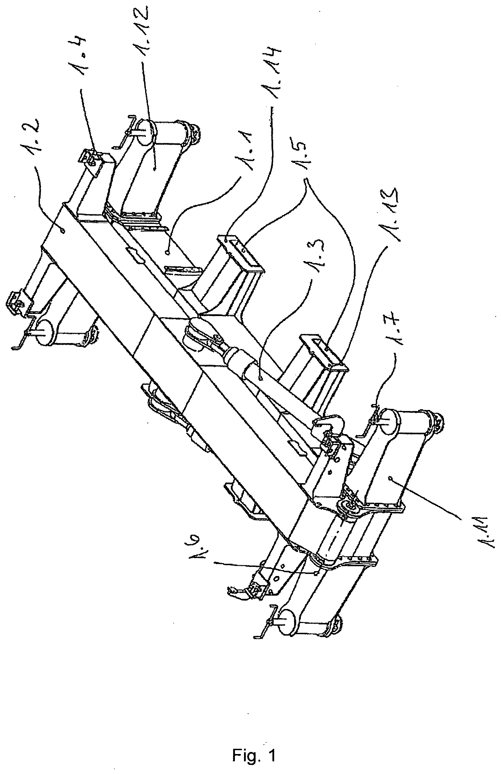

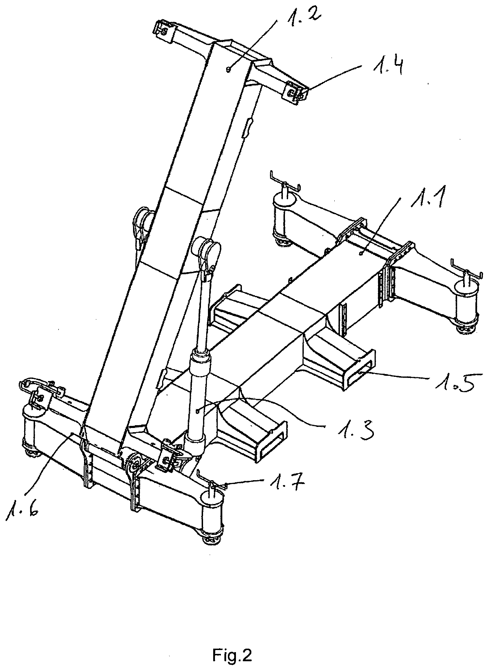

The emptying method of the container with doors on the front side starts with placing the container onto the overturning device, which is shown in figure 1, with an appropriate working machine. When emptying this container type the device according to the embodiment I is not needed on the overturning device. The container position is fixed with four corner pins 1.4. The doors on the front side are opened by a mechanism 5.3. The hydraulic cylinders 1.3 begin to tilt the rotating part 1.2 of the device until the container is completely empty. The device is then in the position as shown in figure 2. The container is then lowered, the doors are closed and the empty container is removed from the device.

The container 6.1 with doors on the lateral side for lateral emptying is equipped on the both lateral sides with doors 6.2, which are rotatably mounted on the upper edge so that their rotation around the longitudinal axis is enabled. The doors occupy approximately ½ of the height of the lateral side of the container. The doors are secured with the same mechanism 5.3 as in the case of container with doors on the front side. Two doors 6.3 are mounted on the roof, which close and protect the cargo space from ingress of impurities and water. In addition, the doors also prevent the dusting of the material during transport. The upper opening serves for loading the container from a silo.

In order to empty the container 6.1 with lateral doors it is required that a device for lateral emptying of containers according to the embodiment I is attached to the overturning device. The container is placed on the device according to the embodiment I. The position of the container is fixed with four corner pins 1.4. The lateral doors are opened with a mechanism 5.3. The hydraulic device is turned on and the hydraulic cylinders 2.3 incline the mobile part 2.2 and the material is consequently emptied from the container. The device is then in the position as shown in figure 4. This is followed by lowering and removal of the container from the device.

Basic frameworks of containers with front and lateral doors are made of hollow section profiles, which firmly allow that the openings are big enough in order to ensure fast and efficient emptying. Walls are closed with a profiled sheet metal.

The method of container emptying according to the invention is enabled with the overturning device and specially designed containers, which are adapted for transportation of bulk materials.

The overturning device for frontal and lateral emptying of containers allows that different types of containers are emptied. The device itself enables emptying of containers with opening on the front side. Additionally, in combination with the device according to embodiment I also containers with openings on the lateral side can be emptied. The device is suitable for standard containers used in truck, rail and ship transport and allows levelling as well as adaptation to the terrain. Its mass is small enough to allow transfer with the same machine as is used for containers having standard sizes.

The emptying system is particularly useful on depots where different types of materials are stored. Such depots can be in ports, thermal powers plants, logistics companies, manufacturing companies, in which such materials are used as raw materials for final products, thus in all places where different materials are stored, transferred and transported. Consequently, the use of other special devices for container emptying is eliminated, since all these processes can be performed by one single device according to the invention.

## Claims

1. An overturning device for frontal and lateral emptying of a container comprising:
- a first base (1.1),
- a lifting element (1.2), which is rotatably mounted into the first base (1.1) in axis (1.6),
- a hydraulic assembly (1.3) comprising hydraulic cylinders and a hydraulic aggregate with installation,
**characterized in that**
- the first base (1.1) consist of a rectangularly shaped base, which has on one side a first transverse carrier (1.11) and on the other side a second transverse carrier (1.12);
- the transverse carriers (1.11 and 1.12) have on both ends stabilizers (1.7) for adaptation to terrain;
- two inner transverse carriers (1.13 and 1.14) are mounted between the transverse carriers (1.11 and 1.12) and have on both ends openings (1.5), which allow transfers with a forklift; and
- the hydraulic assembly (1.3) is mounted into the first base (1.1) near to the transverse carrier (1.11) and in the middle of the lifting element (1.2);
- a second rectangularly shaped base (2.1) is mounted onto the lifting element (1.2), which functions as a supporting passive carrier;
- that a rectangularly shaped mobile part (2.2) is rotatably mounted on the second base (2.1) around the longitudinal axis (2.4);
- that two hydraulic cylinders (2.3) are mounted between the second base (2.1) and the mobile part (2.2), the cylinders (2.3) being connected to the hydraulic installation of the basic overturning device (1.3).

2. A method for container emptying with the overturning device according to claim 1, **characterized in that** the emptying of the container with doors on the front side is performed so that the container is placed onto the overturning device with an appropriate working machine; that the placement of the container is fixed with four corner pins (1.4); that doors (5.2) of the container are opened on the front side with the help of a mechanism (5.3); that the hydraulic cylinders begin to incline the rotatable part (1.2) of the device to the end position: that after completed emptying the container is lowered into the horizontal position and is removed from the overturning device.

3. A method for container emptying with the overturning device according to claim 2, **characterized in that** the position of the container is fixed with four corner pins (1.4); that the mechanism (5.3) opens the lateral doors of the container and turns on the hydraulic device; that hydraulic cylinders (2.3) incline the mobile part (2.2) of the overturning device to the end position; that after completed emptying the container is released into longitudinal position and is removed from the overturning device.

## Patentansprüche

1. Eine Kippvorrichtung zum frontalen und lateralen Entleeren eines Behälters umfassend:
- eine erste Basis (1.19),
- ein Hubelement (1.2), das drehbar in der ersten Basis (1.1) auf einer Achse (1.6) gelagert ist,
- eine hydraulische Anordnung (1.3) umfassend hydraulische Zylinder und ein hydraulisches Aggregat mit einer Installation,
**dadurch gekennzeichnet, dass**
- die erste Basis (1.1) aus einer rechteckigen Basis besteht, die an einer Seite einen ersten Querträger (1.11) und an der anderen Seite einen zweiten Querträger (1.12) aufweist;
- die Querträger (1.11 und 1.12) an beiden Enden Stabilisatoren (1.7) zur Anpassung an das Gelände aufweisen;
- zwei innere Querträger (1.13 und 1.14) zwischen den Querträgern (1.11 und 1.12) angeordnet sind und an beiden Enden Öffnungen (1.5), die den Transport mit einem Gabelstapler ermöglichen, aufweisen; und
- die hydraulische Anordnung (1.3) in der ersten Basis (1.1) neben dem Querträger (1.11) und im Zentrum des Hubelements (1.2) angeordnet ist;
- eine zweite rechteckige Basis (2.1) auf dem Hubelement (1.2) angeordnet ist, die als passiver unterstützender Träger fungiert;
- ein rechteckiger beweglicher Teil (2.2) drehbar auf der zweiten Basis (2.1) um die Längsachse (2.4) angeordnet ist;
- zwei hydraulische Zylinder (2.3) zwischen der zweiten Basis (2.1) und dem beweglichen Teil (2.2) angeordnet sind, wobei die Zylinder (2.3) mit der hydraulischen Installation der grundlegenden Kippvorrichtung (1.3) verbunden sind.

2. Verfahren zum Entleeren von Behältern mit Kippvorrichtung nach Anspruch 1, **dadurch gekennzeichnet, dass** das Entleeren von Behältern mit Türen an der Stirnseite derart ausgeführt ist, dass der Behälter mit einer geeigneten Arbeitsmaschine auf der Kippvorrichtung platziert wird; dass die Platzierung des Behälters durch vier Eckstifte (1.4) fixiert wird; dass die Türen (5.2) des Behälters an der Stirnseite durch einen Mechanismus (5.3) geöffnet werden; dass die hydraulischen Zylinder beginnen, den drehenden Teil (1.2) der Vorrichtung in Richtung der Endposition zu kippen; dass der Behälter nach dem kompletten Entleeren in horizontale Stellung heruntergelassen und von der Kippvorrichtung weggenommen wird.

3. Verfahren zum Entleeren von Behältern mit der Kippvorrichtung nach Anspruch 2, **dadurch gekennzeichnet, dass** die Platzierung des Behälters mit vier Eckstiften (1.4) erfolgt; dass der Mechanismus (5.3) die Seitentüren des Behälters öffnet und die hydraulische Vorrichtung einschaltet; dass die hydraulischen Zylinder (2.3) den beweglichen Teil (2.2) der Kippvorrichtung in Richtung der Endposition kippen; dass der Behälter nach der kompletten Entleerung in die aufrechte Stellung gebracht und von der Kippvorrichtung weggenommen wird.

## Revendications

1. Un dispositif de renversement pour vidage frontal et latéral d'un conteneur comprenant :
- une première base (1.1),
- un élément de levage (1.2) monté de manière à tourner dans la première base (1.1) dans l'axe (1.6),
- un assemblage hydraulique (1.3) comprenant des vérins hydrauliques et un agrégat hydraulique avec installation,
**caractérisé en ce que**
- la première base (1.1) consiste en une base de forme rectangulaire, qui présente un premier support transversal (1.11) sur un côté et un second support transversal (1.12) de l'autre côté ;
- les supports transversaux (1.11 et 1.12) sont dotés de stabilisateurs (1.7) aux deux extrémités pour l'adaptation au terrain ;
- deux supports transversaux internes (1.13 et 1.14) sont agencés entre les supports transversaux (1.11 et 1.12) et sont dotés d'ouvertures (1.5) aux deux extrémités qui permettent des transferts avec un chariot élévateur ; et
- l'assemblage hydraulique (1.3) est monté dans la première base (1.1) à proximité du support transversal (1.11) et au centre de l'élément de levage (1.2) ;
- une seconde base (2.1) de forme rectangulaire est montée sur l'élément de levage (1.2) qui fonctionne comme un support porteur passif ;
- qu'une partie mobile (2.2) de forme rectangulaire est montée de manière à tourner sur la seconde base (2.1) autour de l'axe longitudinal (2.4) ;
- que deux vérins hydrauliques (2.3) sont montés entre la seconde base (2.1) et la partie mobile (2.2), les vérins hydrauliques (2.3) étant reliés à l'installation hydraulique du dispositif de renversement de base (1.3).

2. Un procédé de vidage d'un conteneur à l'aide du dispositif de renversement selon la revendication 1, **caractérisé en ce que** le vidage du conteneur ayant des portes sur la face frontale est réalisé de telle sorte que le conteneur est placé sur le dispositif de renversement avec une machine de travail appropriée ; que le positionnement du conteneur est fixé à l'aide de quatre broches de coin (1.4) ; que les portes (5.2) du conteneur sont ouvertes sur le côté frontal à l'aide d'un mécanisme (5.3) ; que les vérins hydrauliques commencent à incliner la partie rotative (1.2) du dispositif jusqu'à la position finale ; qu'une fois que le conteneur est vidé, il est abaissé en position horizontale et retiré du dispositif de renversement.

3. Le procédé de vidage d'un conteneur à l'aide du dispositif de renversement selon la revendication 2, **caractérisé en ce que** la position du conteneur est fixée par quatre broches de coin (1.4) ; que le mécanisme (5.3) ouvre les portes latérales du conteneur et déclenche le dispositif hydraulique ; que les vérins hydrauliques (2.3) inclinent la partie mobile (2.2) du dispositif de renversement jusqu'à la position finale ; qu'une fois que le conteneur est vidé, il est relâché en position longitudinale et retiré du dispositif de renversement.
